# EUROPÄISCHE PATENTSCHRIFT

(11) **EP 0 446 433 B1**
(45) Veröffentlichungstag und Bekanntmachung des Hinweises auf die Patenterteilung: **17.01.1996**
(21) Anmeldenummer: 90122890.8
(22) Anmeldetag: 29.11.1990
(51) Int. Cl.: H04Q 1/14

(54) **Schutzbaugruppe für einen Verteiler in einem Telekommunikationsnetz**
Protection assembly for a distributor in a telecommunication network
Assemblage de protection pour un distributeur dans un réseau de télécommunication

(30) Priorität: 16.03.1990 DE 4008543
(43) Veröffentlichungstag der Anmeldung: 18.09.1991
(73) Patentinhaber: SIEMENS AKTIENGESELLSCHAFT, D-80333 München (DE)
(72) Erfinder: Rapp, Lothar, W-8000 München 71 (DE); Steiner, Ewald, Dipl.-Ing. (FH), W-8137 Berg 3 (DE)

(56) Entgegenhaltungen:
- FR-A- 2 608 330
- GB-A- 2 060 267
- US-A- 4 113 340

## Beschreibung

Die Erfindung bezieht sich auf eine Schutzbaugruppe für einen Verteiler in einem Telekommunikationsnetz, vor allem in einer Fernsprechvermittlungsanlage, wobei die Schutzbaugruppe mit Überspannungsableitern bestückbar ist, die transversal abstehende drahtartige Anschlußbeinchen aufweisen.

Eine derartige Schutzbaugruppe ist z. B. durch die DE-OS 35 25 233 bekannt geworden. Danach sind die zylindrischen Überspannungsableiter liegend in Aufnahmekammern der steckbaren flachen Schutzbaugruppe eingesetzt. Diese ist mit Kontaktteilen versehen, die entlang einer frontseitigen Längskante als Steckkontakte für entsprechende Gegenkontakte des Verteilers ausgebildet sind. Die Kontaktteile sind im Inneren der Schutzbaugruppe als Lötanschlüsse für die Anschlußbeinchen der Überspannungsableiter ausgebildet. Zur Rückseite führende Kontaktteile sind einstückig mit einem gemeinsamen Erdungsblech der Schutzbaugruppe verbunden.

Ferner ist durch die US-A-4 113 340 eine Verteilerbaugruppe bekannt geworden, bei der Anschlußdrähte von elektrischen Bauelementen in Klemmschlitze von Kontaktklemmen in der Art von Schneidklemmen eindrückbar und lötfrei kontaktierbar sind.

Der Erfindung liegt die Aufgabe zugrunde, die Herstellung und die Wartung der Schutzbaugruppe zu vereinfachen.

Diese Aufgabe wird durch die Erfindung gemäß Anspruch 1 gelöst. Derartige als Schneidklemmen für isolierte Schaltdrähte erprobte Kontaktmittel ermöglichen einen lötfreien Anschluß der Anschlußbeinchen durch einfaches Eindrücken. Dies ist erheblich einfacher und kostengünstiger als das Anlöten. Die Kontaktklemmen umgreifen mit ihren freigestanzten Klemmschenkeln die Anschlußbeinchen der Überspannungsableiter so fest, daß diese sicher kontaktiert und gehalten werden. Defekte Überspannungsableiter können mehrfach und mühelos ausgetauscht werden. Das Eindrücken der Anschlußbeinchen in die Klemmschlitze der Kontaktklemmen kann mit Hilfe eines einfachen Werkzeugs geschehen, das die Anschlußbeinchen eines Überspannungsableiters gemeinsam umfaßt. Bei der Neubestückung ist es möglich, sämtliche Anschlußbeinchen aller Überspannungsableiter einer Schutzbaugruppe gleichzeitig einzudrücken.

Außerdem werden die Überspannungsableiter nach dem Eindrücken der Anschlußbeinchen in die Schneidklemmen sicher im Gehäuse der Schutzbaugruppe fixiert. Dabei ist es vorteilhaft, daß eine Lageverschiebung der Anschlußbeinchen durch ein benachbartes Wandteil der Schutzbaugruppe begrenzt wird.

Durch die parallele Ausrichtung der Anschlußbeinchen zum Boden wird das Spiel zwischen den Stirnseiten der Anschlußbeinchen und der Zwischenwand auf ein Minimum verringert, so daß die Überspannungsableiter mit geringem Spiel im Gehäuse der Schutzbaugruppe gehalten werden. Außerdem sind in dieser Lage die Anschlußbeinchen so gut zugänglich, daß sie ohne Schwierigkeiten aus den Kontaktklemmen herausgezogen werden können. Durch die nach hinten abstehenden Anschlußbeinchen sind die Kontaktklemmen auf der rückwärtigen Seite der Überspannungsableiter angeordnet, so daß die Kontaktteile auf einer hinreichenden Länge im Boden der Schutzbaugruppe fixiert sind.

Vorteilhafte Weiterbildungen der Erfindung sind in den Ansprüchen 2 bis 4 gekennzeichnet:

Durch die Verengung nach Anspruch 2 wird die Eindrücktiefe der Anschlußbeinchen begrenzt, so daß eine gleichmäßige Winkellage der Anschlußbeinchen erreicht wird.

Durch die Weiterbildung nach Anspruch 3 wird eine raumsparende Anordnung der Überspannungsableiter und Kontaktteile ermöglicht.

Die Kontaktteile nach Anspruch 4 ermöglichen eine Kontaktierung sowohl auf der Unter- als auch der Oberseite der Steckzone.

Diese wird zugleich mechanisch verstärkt.

Im folgenden wird die Erfindung anhand eines in der Zeichnung dargestellten Ausführungsbeispiels näher erläutert.

Es zeigen
- Fig. 1: eine teilweise aufgebrochene Draufsicht auf eine Schutzbaugruppe mit Überspannungsableitern,
- Fig. 2: eine Seitenansicht der Schutzbaugruppe nach Figur 1 mit einem Teilschnitt entlang der Linie II-II in Figur 1,
- Fig. 3: einen Schnitt durch die Schutzbaugruppe nach Figur 1 entlang der Linie III-III und
- Fig. 4: einen Schnitt entlang der Linie IV-IV durch die Schutzbaugruppe nach Figur 1.

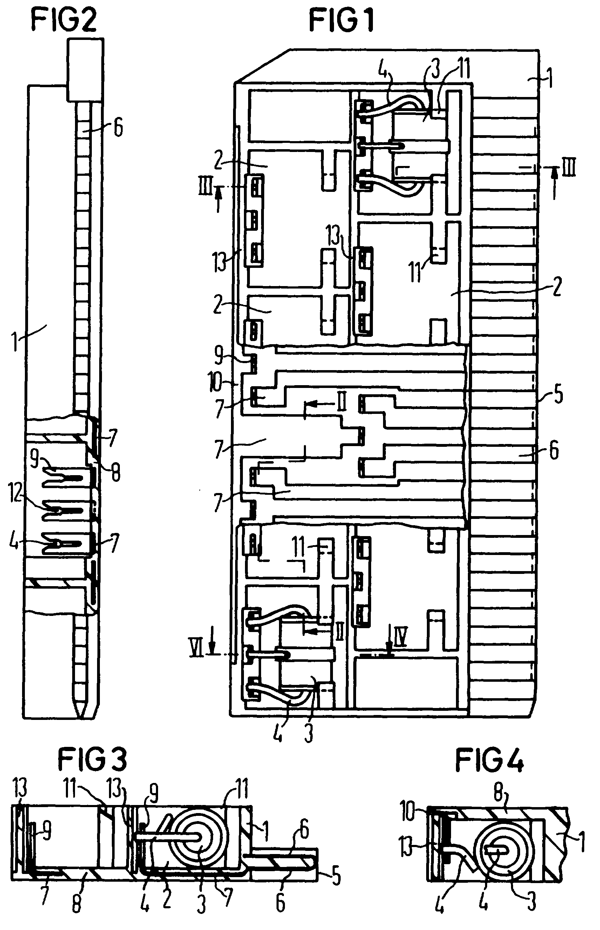

Nach den Figuren 1 bis 4 weist ein Gehäuse 1 einer Schutzbaugruppe für einen Verteiler in einem Telekommunikationsnetz Aufnahmekammern 2 für dreipolige Überspannungsableiter 3 mit drahtartigen transversal abstehenden Anschlußbeinchen 4 auf. Die längliche flache Schutzbaugruppe ist entlang ihrer Frontseite 5 mit Steckkontakten 6 versehen, die mit entsprechenden Gegenkontakten des Verteilers kontaktierbar sind.

Die Steckkontakte 6 sind Bestandteil von Kontaktteilen 7, die sich in einem Boden 8 des Gehäuses 1 in die Richtung der Rückseite der Schutzbaugruppe erstrecken. Die inneren Enden der Kontaktteile 7 sind senkrecht vom Boden 8 hochgebogen. In diesem Abschnitt bilden sie Kontaktklemmen 9 in der Art von Schneidklemmen für isolierte Drähte.

Auf der Rückseite der Schutzbaugruppe ist ein Erdblech 10 angebracht, von dem aus einstückig verbundene streifenförmige Kontaktteile 7 zu den zugehörigen Anschlußbeinchen 4 verlaufen. Das Erdblech 10 ist auf der Rückseite der Schutzbaugruppe frei zugänglich und kann ohne weiteres mit Erdkontaktfedern des Verteilers kontaktiert werden. Die Kontaktteile 7 des Erdblechs 10 enden ebenfalls in Kontaktklemmen 9, die mit den übrigen Kontaktklemmen 9 fluchten.

Die Aufnahmekammern 2 sind in zwei Reihen versetzt zueinander angeordnet. In die Aufnahmekammern ragen in der Längsrichtung der Schutzbaugruppe Vorsprünge 11 hinein, die die Überspannungsableiter 3 teilweise überdecken und die an deren Umfang tangential anliegen. Die Vorsprünge 11 sind so angeordnet, daß die Überspannungsableiter 3 mit hochstehenden Anschlußbeinchen 4 darunter geschoben werden können. Danach werden die Anschlußbeinchen 4 in Richtung des Bodens 8 in eine zu diesem parallele Lage geschwenkt. Dabei werden die Anschlußbeinchen 4 in Klemmschlitze 12 der Kontaktklemmen 9 bis zu einer stufenartigen Verengung eingedrückt. Dabei begrenzen Wandteile 13 des Gehäuses 1 die Verschiebbarkeit der Überspannungsableiter 3, so daß diese mit geringem Spiel unter den schräg stehenden Vorsprüngen 11 gehalten werden. Die stufenartige Verengung ist so angeordnet, daß die Anschlußbeinchen 4 in der eingedrückten Stellung annähernd parallel zum Boden 8 des Gehäuses 1 verlaufen.

Die Kontaktteile 7 sind im Bereich der Steckkontakte 6 u-förmig um die frontseitige Längskante des Gehäuses 1 herumgebogen und bilden so eine Kontaktzone, die eine beidseitige Kontaktierung ermöglicht.

## Patentansprüche

1. Schutzbaugruppe für einen Verteiler in einem Telekommunikationsnetz, vor allem in einer Fernsprechvermittlungsanlage, wobei die Schutzbaugruppe mit Überspannungsableitern (3) bestückbar ist, die transversal abstehende drahtartige Anschlußbeinchen (4) aufweisen und die in Aufnahmekammern (2) eines Gehäuses (1) der Schutzbaugruppe einsetzbar sind, wobei die steckbare flache Schutzbaugruppe mit Kontaktteilen (7) versehen ist, die entlang einer Längskante auf der Frontseite (5) der Schutzbaugruppe als Steckkontakte (6) für entsprechende Gegenkontakte des Verteilers ausgebildet sind und die an ihrem inneren Ende mit den Anschlußbeinchen verbunden sind, und wobei zur Rückseite der Schutzbaugruppe führende Kontaktteile (7) mit einem Erdblech (10) verbunden sind,
**dadurch gekennzeichnet,**
daß die inneren Enden der Kontaktteile (7) als Kontaktklemmen (9) in der Art von Schneidklemmen für isolierte Drähte ausgebildet sind, daß die Kontaktklemmen (9) senkrecht zu einem Boden (8) der Schutzbaugruppe hochgebogen sind und daß die Anschlußbeinchen (4) in Klemmschlitze (12) der Kontaktklemmen (9) eindrückbar sind, daß die Anschlußbeinchen (4) annähernd parallel zum Boden der Schutzbaugruppe in die Richtung der Rückseite der Schutzbaugruppe weisen, daß die Kontaktklemmen (9) für alle Anschlußbeinchen (4) des Überspannungsableiters (3) in einer Ebene angeordnet sind, und
daß die dreipoligen Überspannungsableiter (3) partiell unter tangential schräg anliegende Vorsprünge (11) des Gehäuses (1) einsetzbar sind.

2. Schutzbaugruppe nach Anspruch 1,
**dadurch gekennzeichnet,**
daß der Klemmschlitz (12) in seinem mittleren Bereich eine stufenartige Verengung aufweist.

3. Schutzbaugruppe nach Anspruch 1 oder 2,
**dadurch gekennzeichnet,**
daß die Aufnahmekammern (2) für die Überspannungsableiter (3) in einer Doppelreihe versetzt zueinander angeordnet sind.

4. Schutzbaugruppe nach einem der Ansprüche 1 bis 3,
**dadurch gekennzeichnet,**
daß die Steckkontakte (6) der Kontaktteile um die auf der Frontseite (5) gebildete Längskante des Gehäuses (1) u-förmig herumgebogen sind.

## Claims

1. Protective assembly for a distributor in a telecommunications network, particularly in a telephone exchange, in which the protective assembly can be equipped with overvoltage arresters (3) which exhibit transversely protruding wire-like connecting legs (4) and which can be inserted into receiving chambers (2) of a housing (1) of the protective assembly, wherein the plug-in type flat protective assembly is provided with contact parts (7) which are constructed along a longitudinal edge at the front side (5) of the protective assembly as plug-in contacts (6) for corresponding counter contacts of the distributor and which are connected at their inner end with the connecting legs, and wherein contact parts (7) leading towards the rear of the protective assembly are connected to an earth plate (10), characterised in that the inner ends of the contact parts (7) are constructed as contact terminals (9) in the manner of insulation piercing connecting devices for insulated wires, in that the contact terminals (9) are bent up vertically with respect to a bottom (8) of the protective assembly and in that the connecting legs (4) can be pressed into clamping slots (12) of the contact terminals (9), in that the connecting legs (4) point in the direction of the rear of the protective assembly approximately parallel to the bottom of the protective assembly, in that the contact terminals (9) are arranged in one plane for all connecting legs (4) of the overvoltage arrester (3), and in that the three-pin overvoltage arresters (3) can be partially inserted under tangentially obliquely supported projections (11) of the housing (1).

2. Protective assembly according to Claim 1, characterised in that the clamping slot (12) exhibits in its middle region a step-like constriction.

3. Protective assembly according to Claim 1 or 2, characterised in that the receiving chambers (2) for the overvoltage arresters (3) are arranged offset with respect to one another in a double row.

4. Protective assembly according to one of Claims 1 to 3, characterised in that the plug-in contacts (6) of the contact parts are bent in a U-shape around the longitudinal edge of the housing (1) formed at the front side (5).

## Revendications

1. Module de protection d'un répartiteur dans un réseau de télécommunication, notamment dans une installation de commutation téléphonique, dans lequel le module de protection peut être muni de parasurtensions (3), qui ont des pattes de raccordement du type fils métalliques (4), qui font saillie transversalement et qui peuvent être insérés dans des chambres de logement (2) d'un boîtier (1) du module de protection, le module de protection plat enfichable étant muni de pièces de contact (7), qui sont, le long d'un bord longitudinal sur la face avant (5) du module de protection, sous la forme de contacts enfichables (6) pour des contacts antagonistes correspondants du répartiteur et qui sont reliées, à leur extrémité intérieure, aux pattes de raccordement, et des pièces de contact (7) conduisant à la face arrière du module de protection, étant reliées à une tôle (10) de raccordement à la terre,
caractérisé par le fait
que les extrémités intérieures des pièces de contact (7) sont sous la forme de bornes de contact (9) à la manière de pinces coupantes des fils isolés, que les pinces de contact (9) sont coudées vers le haut perpendiculairement à un fond (8) du module de protection et que les pattes de raccordement (4) peuvent être enfoncées dans des fentes de serrage (12) des pinces de contact (9) que les pattes de raccordement (4) s'étendent approximativement parallèlement au fond du module en direction de la face arrière du module de protection, que, pour toutes les pattes de raccordement (4) du paratension (3) les pinces de contact (9) sont disposées dans un plan, et
que les parasurtensions (3) tripolaires peuvent être insérés en partie au-dessous de parties saillantes (11) du boîtier (1), disposées tangentiellement en oblique.

2. Module de protection suivant la revendication 1, caractérisé par le fait que la fente de serrage (12) a, dans sa partie médiane, un rétrécissement en étage.

3. Module de protection suivant la revendication 1 ou 2, caractérisé par le fait que les chambres de logement (2) des parasurtensions (3) sont disposées suivant une rangée double en étant décalées l'une par rapport à l'autre.

4. Module de protection suivant l'une des revendications 1 à 3, caractérisé par le fait que les contacts enfichables (6) des pièces de contact sont repliés en forme de U autour du bord longitudinal, qui est formé sur la face avant (5), du boîtier (1).
